# EUROPEAN PATENT APPLICATION

(11) **EP 1 428 607 A1**
(43) Date of publication of application: **16.06.2004**
(21) Application number: 03077370.9
(22) Date of filing: 28.07.2003
(51) Int. Cl.: B23K 9/28

(54) **Method for TIG welding aluminium or stainless steel**

(30) Priority: 26.07.2002 BE 200200458
(71) Applicant: Romih, Jozef, 3990 Peer (BE)
(72) Inventor: Romih, Jozef, 3990 Peer (BE)
(74) Representative: Callewaert, Jean

(57) **Abstract**

The invention concerns a method for welding aluminium or aluminium alloys whereby an electric arc (3) is formed between the material to be welded and an electrode (5), which arc (3) is shielded from the ambient air by means of an inert gas, whereas one of the far ends (2) of a first welding rod (1) is brought in this electric arc (3), or in its proximity, such that this welding rod (1) gradually melts via said far end (2) so as to form a welding seam (13), whereby, before said welding rod (1) has melted entirely, the other far end (14) thereof is connected to a far end (15) of a second aluminium welding rod by means of a connecting clement (10) which is also made of aluminium or an aluminium alloy, whereby said first welding rod (1) is then gradually melted further via the first-mentioned far end (2) while forming said welding seam, such that it is used up entirely.

## Description

The invention concerns a method for welding for example stainless steel, aluminium or alloys of these materials, whereby an electric arc is formed between the material to be welded and an electrode, which arc is shielded from the ambient air by means of an inert gas, whereas one of the far ends of a first welding rod is brought in this electric arc, or in its proximity, such that this welding rod gradually melts via said far end in order to form a welding seam.

Such a method for welding stainless steel, aluminium or alloys of these materials is known as TIG welding ("Tungsten Inert Gas" welding).

According to the present state of the art, the welding rods used for TIG welding are not used up entirely. In particular, one far end of the welding rod must be manually held, in order to make its other far end melt in said electric arc. The length of the welding rod is hereby gradually shortened, such that the far end by which the rod is held gradually approaches the electric arc. At a given moment, due to the enormous heat generated by the electric arc, it will be impossible to further hold this far end manually. If the welding rod is manipulated by means of a tool, such as thermally insulated pliers, one has to take care that the tool does not end up in said electric arc in order to prevent it from melting, thereby creating impurities in the welding seam. Thus, there is always a remaining part of the rod which cannot be used up and which is regarded as waste.

The invention aims a method which makes it possible to entirely use up a welding rod when TIG welding for example stainless steel, aluminium or alloys of these materials.

Practically, before said welding rod has melted entirely, the far end of the welding rod which is not situated in the electric arc is connected to a far end of a second welding rod by means of a connecting element made of aluminium or stainless steel, whereby said first welding rod is then gradually melted further to said first far end while forming said welding seam, such that it is used up entirely.

According to a special embodiment of the method according to the invention, when said other far end of the first welding rod is situated in said electric arc, the connecting element is also brought at least partially in said arc, such that it gradually melts in order to form said welding seam

In an advantageous manner, said first and second rod are coaxially connected to one another.

According to a preferred embodiment of the method according to the invention, a cylindrical sleeve made of aluminium is used for said connecting element, whereby said other far end of the first welding rod is pushed in a far end of this sleeve, while the far end of the second welding rod is pushed in the other far end of this sleeve in order to connect both welding rods to one another.

The invention also concerns a connecting element for applying the method according to the invention, whereby this connecting element comprises a sleeve made of aluminium which can fix said far ends of the welding rods in a practically fitting manner.

Other particularities and advantages of the invention will become clear from the following description of a specific embodiment of the method and the connecting element according to the invention. This description is given as an example only and does not restrict the scope of the claimed protection in any way; the figures of reference used hereafter refer to the accompanying drawings.

Figure 1 schematically represents a longitudinal section of a welding electrode with a gas mouthpiece and a welding rod when TIG welding an aluminium work piece.

Figure 2 is a side view of two welding rods connected to one another via a connecting element according to the invention.

Figure 3 is a schematic view in perspective of a connecting element according to the invention.

Figure 4 is a schematic view in perspective of the welding rods and the connecting element from figure 2.

Figure 5 is a schematic view in perspective of a welding rod of which one far end has been flattened.

Figure 6 is a schematic view in perspective of the welding rod from figure 5 whereby the flat end has been bent in order to form a connecting element.

In the different drawings, the same reference figures refer to identical or analogous elements.

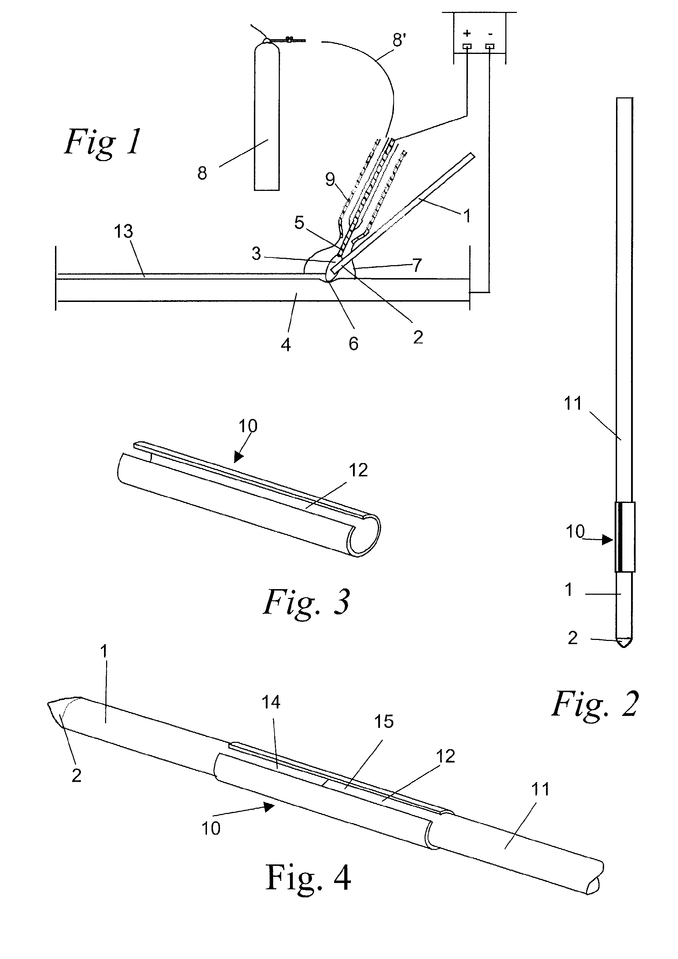

TIG welding is a frequently used technique for welding metals which oxidize very quickly and/or form a passivating coat on their surfaces, such as stainless steel, aluminium or an alloy of these materials. As represented in figure 1, while TIG welding, an electric arc 3 is formed between a work piece 4 which needs to be welded, made of stainless steel, aluminium or an alloy of these materials, and a non-fusing electrode 5 which is for example mainly made of tungsten. The electric arc 3 is created by bringing the non-fusing electrode 5 at a distance of about 4 mm from the work piece after an electric voltage difference had been created between them. The heat which is generated in the electric arc 3 thereby makes the work piece 4 melt locally, such that a melting bath 6 is created. The electric arc 3 and the melting bath 6 are shielded from the ambient air by means of a screen gas 7. This screen gas 7 is an inert gas such as for example helium or argon and it is guided from a gas bottle 8 via a gas pipe 8' to a gas mouthpiece 9 extending around the non-fusing electrode 5. This gas mouthpiece 9 is coaxial to the electrode 5 and opens near the far end of the latter where said electric arc 3 is formed, such that the gas 7 leaving the mouthpiece 9 shields the electric arc 3 and the melting bath 6 from the ambient air. Thus is avoided that melted metal from the melting bath 6 oxidizes or reacts with the ambient air. In order to supply metal to said melting bath 6 in order to form a welding seam 13 while the electrode 5 is being moved over the work piece 4, a far end 2 of a welding rod 1, preferably made of the same or a similar material as the work piece 4, aluminium or an alloy of these materials, is manually held in the electric arc 9. The far end 2 of the welding rod 1 hereby melts, such that the melted metal thereof ends up in the melting bath 6. Thus, the length of the welding rod 1 becomes gradually smaller. When this length is for example less than 10 cm, it is no longer possible according to the existing methods to further use this last part of the welding rod 1 while TIG welding, and this part is regarded as waste.

According to the method of the invention, the other far end 14 of the welding rod 1, which is opposite to the first-mentioned far end 2, is connected to a far end 15 of a second welding rod 11, so that both rods 1 and 11 are coaxial and are fixed to one another. To this end is used a connecting element 10 as is schematically represented in figures 2 and 4. The connecting element 10 is represented in figure 3 and it has the shape of a cylinder from which has been cut a strip of material over the entire length and with a fixed width. In particular, this connecting element 10 is formed of a cylindrical sleeve with a longitudinal recess 12 extending over the entire length thereof. Thus, said other far end 14 of the welding rod 1 is pushed in one far end of the sleeve 10, while the far end 15 of the second welding rod is pushed in the other far end of the sleeve 10 up to practically said other far end 14 of the first-mentioned welding rod 1. The sleeve 10 hereby fixes the respective far ends 14 and 15 of the respective welding rods 1 and 11, such that it forms a clamped joint. Thanks to the presence of said recess 12, the connecting element 10 can be somewhat elastically deformed in order to allow for the respective far ends 14 and 15 of the welding rods 1 and 11 to be clamped in the connecting element 10. The inner diameter of the connecting element 10 is preferably somewhat smaller than, or at the most equal to the diameter of the welding rods 1 and 11. The connecting element 10 has for example a length of 30 mm whereby the thickness of the wall of the connecting element 10 amounts to some 0.5 mm. The width of said recess 12 amounts to for example 1.5 mm.

The connecting element 10 is also made of aluminium, just as the work piece 4 and the welding rods 1 and 11, so that when welding this work piece 4, the connecting element 10, together with the respective far ends 14 and 15 of the welding rods 1 and 11, melts in said electric arc 3. Thus, said second welding rod 11 is being manually held while the remaining part of the first-mentioned welding rod 1 is gradually melting, together with the connecting element 10, until the first-mentioned welding rod 1 has melted entirely, whereby the second welding rod 11 is then gradually fused via the corresponding far end 15. When this second welding rod 11 has become too short to be manually held, it is fixed, as described above, to a subsequent welding rod by means of a connecting element 10.

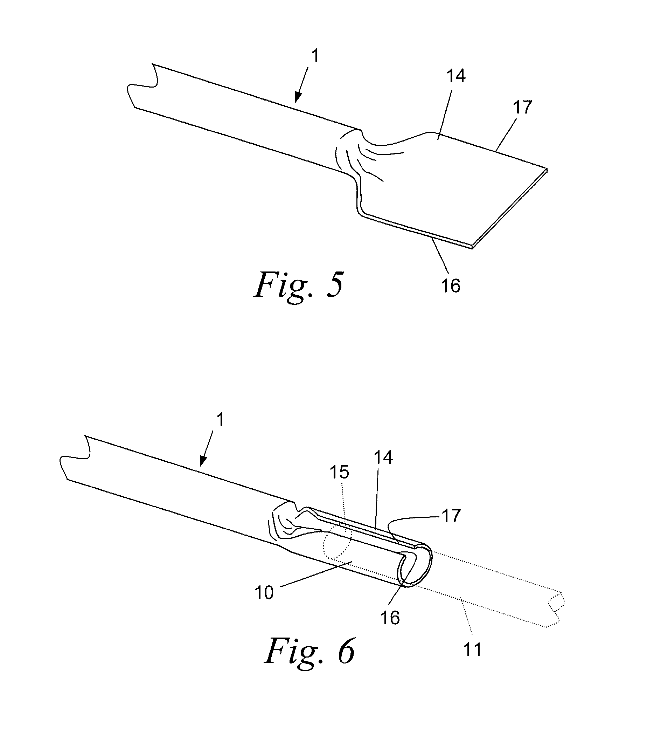

Figures 5 and 6 represent a second embodiment of a connecting element 10. This connecting element 10 is formed by plastically deforming a far end 14 of a welding rod by for example rolling this far end until it is flat and plate-shaped as represented in figure 5. Next, this far end 14 is bent in order to form a connecting element 10. The opposite lateral edges 16 and 17 of the far end 14 are hereby moved towards each other in such a manner that a tube is created out of the latter which forms said connecting element 10. The axis of said tube is preferably parallel to the axis of the welding rod 1.

Figure 6 shows a part of the welding rod 1 whereby the far end 14 thereof forms a connecting element 10 in which a subsequent welding rod 11 can be clamped. The latter welding rod 11 is represented as a dotted line.

It is clear that the above-described embodiments of the connecting element according to the invention, represented in the figures, concern only some of the possible embodiments and that several alternative embodiments are possible. Thus, for example, said recess 12 can be helical, or the connecting element 10 may have no recess 12 at all.

Further, said work piece 4 can be made of any alloy of aluminium or stainless steel, and said connecting element is preferably made of the same material as that of the work piece to be welded. For the welding rod is then preferably also used an alloy of aluminium or stainless steel. Although the above-described invention is particularly suited for welding a work piece made of aluminium or stainless steel, it can also be applied to other metals such as for example steel plate or other ferro-alloys.

## Claims

1. Method for welding a work piece (4) made of a metal alloy, whereby an electric arc (3) is formed between the material to be welded and an electrode (5), which arc (3) is shielded from the ambient air by means of an inert gas, whereas one of the far ends (2) of a first welding rod (1) is brought in this electric arc (3), or in its proximity, such that this welding rod (1) gradually melts via said far end (2) in order to form a welding seam (13), **characterised in that**, before said welding rod (1) has melted entirely, the other far end (14) thereof is connected to a far end (15) of a second welding rod (11) by means of a connecting element (10), whereby said first welding rod (1) is then gradually melted further via the first-mentioned far end (2) when forming said welding seam (13), such that this welding rod (1) is used up entirely.

2. Method according to claim 1, **characterised in that** when said other far end (14) of the first welding rod (1) is situated in said electric arc (3), said connecting element (10) is also brought at least partially in this arc (3), such that it gradually melts so as to form said welding seam (13).

3. Method according to claim 1 or 2, **characterised in that**, when melting said other far end (14) of said first welding rod (1), said far end (15) of the second welding rod (11) is brought in said arc (3), whereby this second welding rod (11) is made to fuse gradually in order to form said welding seam (13).

4. Method according to any of claims 1 to 3, **characterised in that** said first and second rod (1,11) are coaxially connected.

5. Method according to any of claims 1 to 4, **characterised in that** said welding rods (1,11) are fixed to one another by means of a clamped joint (10).

6. Method according to any of claims 1 to 5, **characterised in that** said other far end (14) of the first welding rod (1) and the far end (15) of the second welding rod (11) are clamped in said connecting element (10), such that these welding rods (1,11) are fixed in relation to one another.

7. Method according to any of claims 1 to 6, **characterised in that** a cylindrical sleeve is used for said connecting element (10), whereby said other far end (14) of the first welding rod (1) is pushed in a far end of this sleeve, while the far end (15) of the second welding rod (11) is pushed in the other far end of this sleeve in order to connect both welding rods (1,11).

8. Method according to any of the preceding claims, **characterised in that** said work piece (4) is made of stainless steel, aluminium or an alloy of these materials respectively, whereby an electric arc (3) is formed between the material to be welded and an electrode (5), which arc (3) is shielded from the ambient air by means of an inert gas, while one of the far ends (2) of a first welding rod (1) which is made of stainless steel, aluminium or an alloy of these materials respectively, is brought in this electric arc (3), or in its proximity, such that this welding rod (1) gradually melts via said far end (2) so as to form a welding seam (13), whereby, before said welding rod (1) has melted entirely, the other far end (14) thereof is connected to a far end (15) of a second welding rod (11) by means of a connecting element (10) which is also made of stainless steel, aluminium or an alloy of these materials respectively, whereby said first welding rod (1) is then gradually melted further via the first-mentioned far end (2) while forming said welding seam (13), such that this welding rod (1) is used up entirely.

9. Connecting element for applying the method according to any of the preceding claims, **characterised in that** it comprises a sleeve (10) which can clamp said far ends (14,15) of the welding rods (1,11) in a practically fitting manner.

10. Connecting element according to claim 9, **characterised in that** said sleeve (10) consists of a tube having a longitudinal recess (15) extending over practically the entire length thereof.

11. Connecting element according to claim 9, **characterised in that** said sleeve (10) is part of a welding rod (1) and is formed by plastically deforming a far end (14) of this welding rod (1) until it forms a plate, whereby the opposite lateral edges (16,17) of this plate are bent towards one another.
